# EUROPEAN PATENT APPLICATION

(11) **EP 2 202 964 A2**
(43) Date of publication of application: **30.06.2010**
(21) Application number: 09180180.3
(22) Date of filing: 21.12.2009
(51) Int. Cl.: H04N 5/445, H04N 5/45

(54) **Apparatus and method for displaying graphics information in image processing device**

(30) Priority: 29.12.2008 KR 20080136008
(71) Applicant: Alticast Corp., Seoul 137-070 (KR)
(72) Inventor: Kim, Bo-Kyung, Seoul (KR)
(74) Representative: Boakes, Jason Carrington

(57) **Abstract**

Disclosed is an apparatus and method for processing and displaying graphics information in an image signal processing device. To this end, a plurality of virtual graphics planes implemented by software are implemented on one hardware plane for processing graphics information in a receiver, and high-definition graphics information and standard-definition graphics information are individually processed through the use of the plurality of virtual graphics planes. When a screen in updated, each virtual graphics plane performs a scaling task to the entire screen of an actual physical plane so that two planes can be displayed at the same time.

## Description

### BACKGROUND OF THE INVENTION

### 1. Field of the Invention

The present invention relates to an apparatus and method for processing image signals, and more particularly to an image signal processing apparatus and method for processing and displaying graphics information.

### 2. Description of the Related Art

Nowadays, in the broadcasting industry, a developmental trend is progressing from analog broadcast service to digital broadcast service. The digital broadcast service is provided through terrestrial waves at first, and is expanded to use various transmission media including a cable, satellite, etc. With the development of the scheme for providing broadcast service, receivers (e.g. televisions) for providing the broadcast service are being changed from an analog scheme to a digital scheme, too.

A television system (hereinafter, referred to as a "digital broadcasting system") supporting the digital scheme may be regarded as a system which modulates a broadcast into a digital signal, transmits the digital signal through a given transmission medium, and enables the user to view the broadcast by demodulating the transmitted digital signal. Accordingly, since the digital broadcasting system uses compressed data, the digital broadcasting system can transmit more channels than those transmitted in a television system (hereinafter, referred to as an "analog broadcasting system") supporting an analog scheme. In addition, the digital broadcasting system may be regarded as a broadcasting system which can efficiently utilize limited resources because, for example, various additional functions can be operated therein.

Meanwhile, the digital broadcasting system may be classified into a standard definition (SD) broadcasting system and a high definition (HD) broadcasting system according to the definitions of data to be provided.

Data provided in the digital broadcasting system may be classified into information corresponding to contents, and information corresponding to applications. Generally, the information corresponding to contents is called "video information," and the information corresponding to applications is called "graphics information."

Especially, when graphics information is provided, an SD broadcasting system uses a screen graphics resolution of 720x480 or 720x576 according to standards, and an HD broadcasting system uses a screen graphics resolution of 960x540 or 1280x720 according to standards. Accordingly, televisions may be classified into SD-level televisions and HD-level televisions according to the resolutions thereof, too.

Also, as HD-level televisions have come into wide use, applications supporting a definition of the HD level have been required to be developed and provided. However, the fact of the matter is that it is inevitable to continuously provide applications supporting definitions of the SD level, which have been provided for conventional SD-level televisions.

In addition, among various applications, there is an unbound application which should be displayed together with another application on a screen. The unbound application includes an electronic program guide (EPG), short message service (SMS), alarm, etc.

Since the conventional image processing device includes only a single graphics screen in hardware form, a screen corresponding to only one definition at one time can be displayed. Therefore, when graphics information based on an application is received, the screen resolution shifts to the SD level if the definition of the received graphics information corresponds to the SD level, while the screen resolution shifts to the HD level if the definition of the received graphics information corresponds to the HD level.

As described above, according to the conventional technology, the resolution of a screen shifts according to definitions of graphics information, so that a screen blinking phenomenon is caused during one or two seconds. This requires a separate time interval when graphics information is displayed, thereby causing inconvenience to the user.

For this reason, in the case of a receiver supporting a definition of the HD level, a method of blocking an SD-level application from being supported is proposed as a solution. However, in the case of applying the solution, it is necessary to additionally develop an HD-level application having the same purpose as that of an SD-level application, so that additional expenses are required.

When the aforementioned matters are taken into consideration, it is necessary to develop and provide applications having a definition of the HD level as televisions supporting a definition of the HD level have come into wide use. However, since applications having SD-level definitions, which have been provided until now, are provided together with applications having HD-level definitions, it is urgent to develop a method for accommodating applications having mutually different definitions together with each other from a receiver's point of view.

### SUMMARY OF THE INVENTION

Accordingly, the present invention has been made to solve the above-mentioned problems occurring in the prior art, and the present invention provides a graphics information displaying apparatus and method capable of simultaneously processing high-definition graphics information and standard-definition graphics information.

Also, the present invention provides a graphics information displaying apparatus and method for allowing an image processing device to process pieces of graphics information of mutually different definitions through the use of a plurality of virtual graphics planes, which is implemented by software installed on one hardware plane.

In addition, the present invention provides a graphics information displaying apparatus and method for processing high-definition graphics information and standard-definition graphics information through mutually different virtual graphics planes.

In accordance with an aspect of the present invention, there is provided a method for displaying graphics information in an image processing device which processes a high-definition video signal, the method including the steps of: checking a definition of graphics information provided from an application server through a broadcasting network; installing a plurality of virtual graphics planes implemented by software on one hardware plane for processing the graphics information so that the virtual graphics planes can be selectively driven, driving, when it is checked that the graphics information has a standard definition, a first virtual graphics plane for processing standard-definition graphics information among the plurality of virtual graphics planes, and processing the standard-definition graphics information to produce a graphics image signal which can be displayed together with the high-definition video signal; and when it is checked that the graphics information has a high definition, driving a second virtual graphics plane for processing high-definition graphics information among the plurality of virtual graphics planes, and processing the high-definition graphics information to produce a graphics image signal which can be displayed together with the high-definition video signal.

In accordance with another aspect of the present invention, there is provided an apparatus for displaying graphics information in an image processing device which processes a high-definition video signal, the apparatus including: a graphics processing plane which includes a plurality of virtual graphics planes implemented by software on one piece of hardware for processing graphics information provided from an application server through a broadcasting network, drives at least one virtual graphics plane among the plurality of virtual graphics planes according to a definition of the graphics information, and processes the graphics information to produce a graphics image signal that can be displayed together with the high-definition video signal; and a multiplexer for multiplexing a first graphics image signal and a second graphics image signal, which are output from the graphics processing plane, to one graphics image signal, and outputting the one graphics image signal, wherein the graphics processing plane checks a definition of the graphics information, processes, when it is checked that the graphics information has a standard definition, the standard-definition graphics information to produce the first graphics image signal by driving a first virtual graphics plane for processing standard-definition graphics information among the plurality of virtual graphics planes, and processes, when it is checked that the graphics information has a high definition, the high-definition graphics information to produce the second graphics image signal by driving a second virtual graphics plane for processing high-definition graphics information among the plurality of virtual graphics planes.

### BRIEF DESCRIPTION OF THE DRAWINGS

The above and other aspects, features and advantages of the present invention will be more apparent from the following detailed description taken in conjunction with the accompanying drawings, in which:
FIG. 1 is a block diagram illustrating a basic conception for processing graphics information according to an exemplary embodiment of the present invention;
FIG. 2 is a block diagram illustrating the configuration of an image processing device according to an exemplary embodiment of the present invention; and
FIG. 3 is a flowchart illustrating a control flow for processing graphics information according to an exemplary embodiment of the present invention.

### DETAILED DESCRIPTION OF THE EXEMPLARY EMBODIMENT

The present invention will now be described in detail in connection with an apparatus and method for manufacturing and using the present invention with reference to the accompanying drawings. It should be noted that terms used herein are defined in consideration of the functions thereof in the present invention.

According to embodiments of the present invention, the following description will be specifically given in detail on a method for implementing a plurality of virtual graphics planes by software on one hardware plane to process graphics information in a receiver, and individually processing high-definition graphics information and standard-definition graphics information through the use of the plurality of virtual graphics planes.

In addition, according to an exemplary embodiment of the present invention, when a screen is updated, each of a plurality of virtual graphics planes performs a scaling task to the entire screen of an actual physical plane so that two planes can be displayed at the same time.

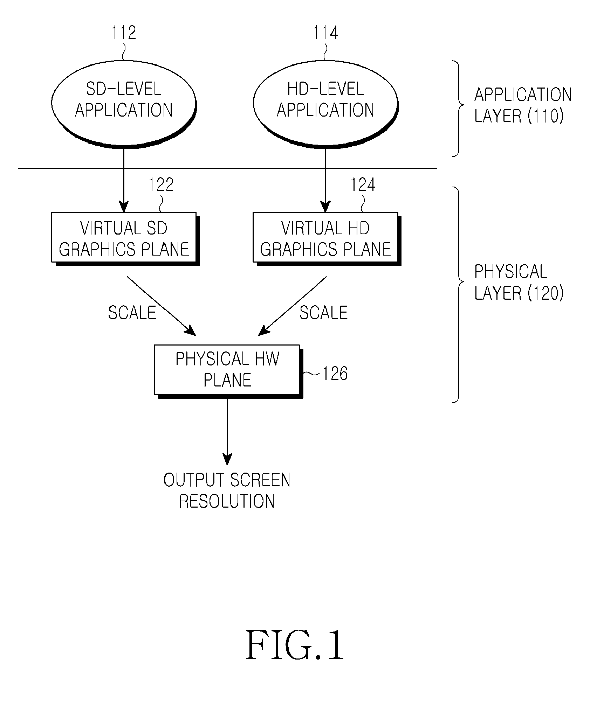

FIG. 1 is a block diagram illustrating a basic conception for processing graphics information according to an exemplary embodiment of the present invention.

Referring to FIG. 1, the graphics information is processed through an application layer 110 and a physical layer 120.

The application layer 110 checks the definition of graphics information which is provided from an application server through a broadcasting network. That is, the application layer 110 determines if the definition of graphics information provided from the application server corresponds to a high definition (HD) level or a standard definition (SD) level.

Then, according to the determined definition, the application layer 110 provides the received graphics information to any one of two virtual graphics planes 122 and 124, which constitute the physical layer 120. That is, the application layer 110 provides high-definition (i.e. HD-level) graphics information to the virtual HD-level graphics plane 124, and provides standard-definition (i.e. SD-level) graphics information to the virtual SD-level graphics plane 122.

In this case, the virtual SD-level graphics plane 122 and the virtual HD-level graphics plane 124, corresponding to a plurality of virtual graphics planes implemented by software, may divide and use a memory area within one hardware plane for processing graphics information.

In the physical layer 120, a plurality of virtual graphics planes 122 and 124 are equipped on one hardware plane. That is, on one hardware plane, the virtual HD-level graphics plane 124 for processing high-definition (HD-level) graphics information, and the virtual SD-level graphics plane 122 for processing standard-definition (SD-level) graphics information are equipped. For example, the standard-definition, i.e. the SD-level definition, corresponds to "720x480," and the high-definition, i.e. the HD-level definition corresponds to "960x540."

Therefore, in the application layer 110, it is recognized as if two planes exists in hardware form on the physical layer 120.

The virtual SD-level graphics plane 122 receives graphics information having an SD-level definition, which is provided from the application layer 110, and processes the received graphics information to be a form which can be displayed together with a video signal. That is, the graphics information having the SD-level definition is scale-processed to be displayed on the entire screen of a display device.

In addition, the virtual HD-level graphics plane 124 receives graphics information having an HD-level definition, which is provided from the application layer 110, and processes the received graphics information to be a form which can be displayed together with a video signal. That is, the graphics information having the HD-level definition is scale-processed to be displayed on the entire screen of the display device.

The SD-level graphics information processed by the virtual SD-level graphics plane 122 and the HD-level graphics information processed by the virtual HD-level graphics plane 124 are provided to a physical hardware plane 126.

The physical hardware plane 126 outputs the SD-level graphics information and the HD-level graphics information, which are provided from the virtual SD-level graphics plane 122 and the virtual HD-level graphics plane 124, respectively, in the form of a graphics image signal which can be displayed through the display device.

As described above, according to an exemplary embodiment of the present invention, when a screen is updated, each of a plurality of virtual graphics planes scales high-definition graphics information and standard-definition graphics information to the entire screen of an actual physical plane, so that two planes can be displayed at the same time.

Therefore, according to an embodiment of the present invention, a receiver can accommodate applications of mutually different definitions, and also the speed reduction due to a change in definition is not caused in the receiver, so that the user's convenience is enhanced. Also, according to an exemplary embodiment of the present invention, since high-definition graphics information and standard-definition graphics information are processed through the use of one hardware plane by software, an additional cost for overlappingly developing not only receivers but also applications according to definitions is not required.

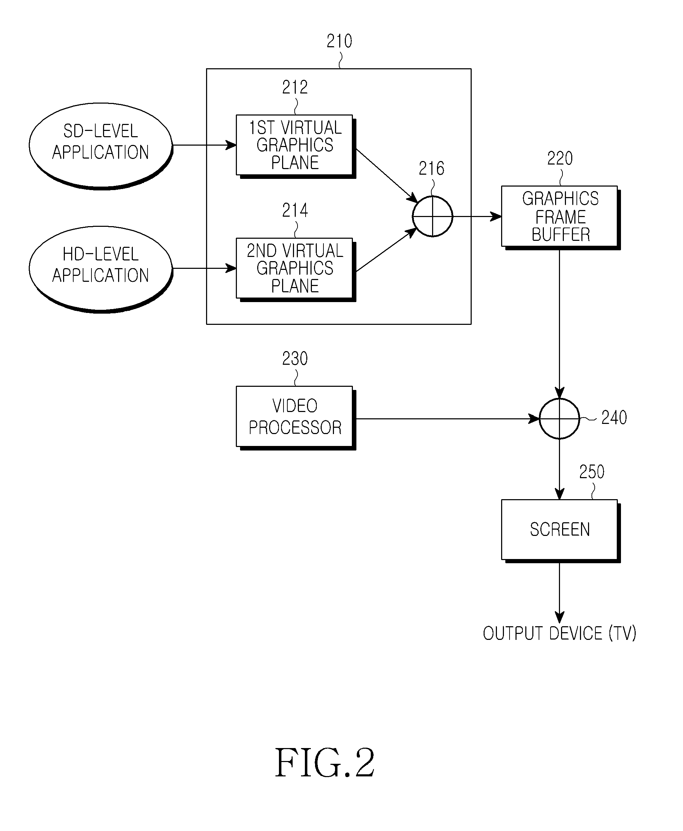

FIG. 2 is a block diagram illustrating the configuration of an image processing device according to an exemplary embodiment of the present invention.

Referring to FIG. 2, SD-level graphics information and HD-level graphics information are drawn to a graphics plane 210. The graphics plane 210 includes a first virtual graphics frame 212 for processing SD-level graphics information, and a second virtual graphics frame 214 for processing HD-level graphics information.

The first virtual graphics frame 212 processes the SD-level graphics information drawn from an exterior so that the SD-level graphics information can be scaled to the entire screen of a display device, and outputs the processed SD-level graphics information. The second virtual graphics frame 214 processes the HD-level graphics information drawn from an exterior so that the HD-level graphics information can be scaled to the entire screen of a display device, and outputs the processed HD-level graphics information.

In this case, the first virtual graphics frame 212 and second virtual graphics frame 214, which are implemented by software, may divide and use a memory area within one hardware plane 210 for processing graphics information.

The graphics plane 210 further includes a multiplexer 216 for multiplexing the SD-level graphics information and the HD-level graphics information, which are output from the first virtual graphics frame 212 and the second virtual graphics frame 214, respectively, and outputting the multiplexed information in the form of a graphics image signal.

The multiplexer 216 adds the SD-level graphics information and the HD-level graphics information, which are output from the first virtual graphics frame 212 and the second virtual graphics frame 214, respectively, and outputs one graphics image signal which can be scaled to the entire screen of the display device. The graphics image signal output from the multiplexer 216 is a final output of the graphics plane 210.

The graphics image signal, which is the final output of the graphics plane 210, is buffered by a graphics frame buffer 220. The graphics frame buffer 220 buffers the graphics image signal in units of frames of a screen.

A video processor 230 receives broadcast content information provided from a broadcast content server through a broadcasting network, extracts a video signal based on the broadcast content information, processes the extracted video signal in order to output the extracted video signal through the display device, and outputs the extracted video signal after processing the extracted video signal to be output through the display device. A video signal output from the video processor 230 corresponds to a content signal having a high definition or a standard definition. It is preferred that the video signal has an HD-level definition.

A graphics image signal output from the graphics frame buffer 220 and a video signal output from the video processor 230 are multiplexed by a multiplexer 240, and are then output. An image signal output from the multiplexer 240 has a form which allows a video signal, SD-level graphics information, and HD-level graphics information to be displayed on one screen of the display device.

Accordingly, an image signal output from the multiplexer 240 is provided to a television, which is an external display device, through a screen 250.

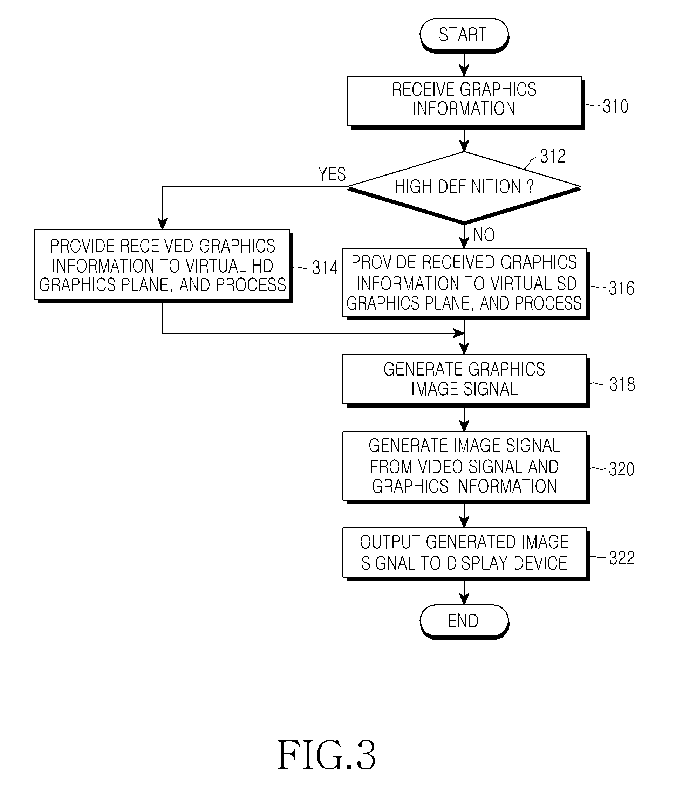

FIG. 3 is a flowchart illustrating a control flow for processing graphics information according to an exemplary embodiment of the present invention.

Referring to FIG. 3, in step 310, an image processing device receives graphics information provided from an application server through a broadcasting network. In step 312, the definition of the received graphics information is determined. When it is determined that the received graphics information corresponds to a high-definition application in step 312, the image processing device proceeds to step 314. In contrast, when it is determined that the received graphics information corresponds to a standard-definition application in step 312, the image processing device proceeds to step 316.

In step 314, the image processing device scales the high-definition graphics information so that the high-definition graphics information can be updated on a screen, and then outputs the scaled high-definition graphics information. In step 316, the image processing device scales the standard-definition graphics information so that the standard-definition graphics information can be updated on a screen, and then outputs the scaled standard-definition graphics information.

The image processing device can simultaneously perform the operation of scaling and outputting the high-definition graphics information in step 314, and the operation of scaling and outputting the standard-definition graphics information in step 316.

Accordingly, in an application's point of view, it is recognized as if the image processing device has two physical hardware planes, so that the application can find a desired graphics plane and make a drawing on a screen.

To this end, the image processing device starts a virtual plane for processing SD-level graphics information or a virtual plane for processing HD-level graphics information by controlling a graphics plane constituted by one piece of hardware. It goes without saying that the image processing device may start both virtual planes if necessary.

In step 318, the image processing device generates one piece of graphics information for displaying the HD-level graphics information and SD-level graphics information, which have been processed in steps 314 and 316, respectively, on one screen.

In step 320, the image processing device generates an image signal from the generated one piece of graphics information and a video signal. The video signal corresponds to content data provided from a broadcast content server through a broadcasting network.

In step 322, the image processing device outputs the generated image signal to a display device, so that pieces of graphics information based on applications having mutually different definitions can be displayed on one screen, together with contents such as a moving picture.

As described above, according to an exemplary embodiment of the present invention, an image processing device can simultaneously display HD-level graphics information and SD-level graphics information on a screen by software. Accordingly, an operator providing application service can utilize an SD-level application, which has been provided before, without modification, and also add an HD-level application without problem.

Also, according to an exemplary embodiment of the present invention, the image processing device is configured to simultaneously display two pieces of graphics information having mutually different definitions, instead of changing the definition of graphics information. Accordingly, the speed reduction due to a change in definition is not caused, and the user's convenience can be enhanced.

Especially, the graphics information processing method according to an exemplary embodiment of the present invention can be more efficiently utilized to display an unbound application, which is displayed together with another application on a screen.

While the invention has been shown and described with reference to certain exemplary embodiments thereof, it will be understood by those skilled in the art that various changes in form and details may be made therein without departing from the spirit and scope of the invention as defined by the appended claims. Accordingly, the scope of the invention is not to be limited by the above embodiments but by the claims and the equivalents thereof.

## Claims

1. A method for displaying graphics information in an image processing device which processes a high-definition video signal, the method comprising the steps of:
checking a definition of graphics information provided from an application server through a broadcasting network;
installing a plurality of virtual graphics planes implemented by software on one hardware plane for processing the graphics information so that the virtual graphics planes can be selectively driven, driving, when it is checked that the graphics information has a standard definition, a first virtual graphics plane for processing standard-definition graphics information among the plurality of virtual graphics planes, and processing the standard-definition graphics information to produce a graphics image signal which can be displayed together with the high-definition video signal; and
when it is checked that the graphics information has a high definition, driving a second virtual graphics plane for processing high-definition graphics information among the plurality of virtual graphics planes, and processing the high-definition graphics information to produce a graphics image signal which can be displayed together with the high-definition video signal.

2. The method as claimed in claim 1, further comprising a step of multiplexing the graphics image signal output from the first virtual graphics plane and the graphics image signal output from the second virtual graphics plane to produce one graphics image signal, and outputting the graphics image signal produced through the multiplexing.

3. The method as claimed in claim 1 or 2, further comprising the steps of:
buffering the graphics image signal output through the multiplexing in units of frames; and
multiplexing and outputting the high-definition video signal and the graphics image signal, which has been buffered and outputted.

4. The method as claimed in claim 1, wherein the plurality of virtual graphics planes implemented by software divide and use a memory area within one hardware plane for processing the graphics information.

5. An apparatus for displaying graphics information in an image processing device which processes a high-definition video signal, the apparatus comprising:
a graphics processing plane which comprises a plurality of virtual graphics planes implemented by software on one piece of hardware for processing graphics information provided from an application server through a broadcasting network, drives at least one virtual graphics plane among the plurality of virtual graphics planes according to a definition of the graphics information, and processes the graphics information to produce a graphics image signal that can be displayed together with the high-definition video signal; and
a multiplexer for multiplexing a first graphics image signal and a second graphics image signal, which are output from the graphics processing plane, to one graphics image signal, and outputting the one graphics image signal,
wherein the graphics processing plane checks a definition of the graphics information, processes, when it is checked that the graphics information has a standard definition, the standard-definition graphics information to produce the first graphics image signal by driving a first virtual graphics plane for processing standard-definition graphics information among the plurality of virtual graphics planes, and processes, when it is checked that the graphics information has a high definition, the high-definition graphics information to produce the second graphics image signal by driving a second virtual graphics plane for processing high-definition graphics information among the plurality of virtual graphics planes.

6. The apparatus as claimed in claim 5, further comprising:
a buffer for buffering the multiplexed and outputted graphics image signal in units of frames; and
a multiplexer for multiplexing and outputting the high-definition video signal and the graphics image signal, which has been buffered and outputted.

7. The apparatus as claimed in claim 6, wherein the plurality of virtual graphics planes implemented by software divide and use a memory area within the graphics processing plane.
